**Europäisches Patentamt**

**European Patent Office**

**Office européen des brevets**

(19)

(11) Veröffentlichungsnummer: **0 350 643**

**A2**

## (12) EUROPÄISCHE PATENTANMELDUNG

(21) Anmeldenummer: 89110852.4

(51) Int. Cl.⁴: **B01D 53/34**

(22) Anmeldetag: 15.06.89

(30) Priorität: 28.06.88 DE 3821744

(43) Veröffentlichungstag der Anmeldung:
17.01.90 Patentblatt 90/03

(84) Benannte Vertragsstaaten:
**BE DE ES FR GB IT NL**

(71) Anmelder: **BAYER AG**

**D-5090 Leverkusen 1 Bayerwerk(DE)**

Anmelder: **BAYER ANTWERPEN N.V.**
**Kanaaldok B 1 Kruisschans**
**B-2040 Antwerpen 4(BE)**

(72) Erfinder: **Van Royen, Luc, Dr.**
**Grimaldilaan 92**
**B-2091 Stabroek(BE)**
Erfinder: **Putseys, Roland, Dr.**
**Sparrendreef 3**
**B-2180 Heide-Kalmthout(BE)**
Erfinder: **Van Herck, Willy, DI.**
**Jacobuslei 108**
**B-2130 Brasschaat(BE)**
Erfinder: **Sluyts, Domien**
**Elzenlaan 4**
**B-2091 Stabroek(BE)**
Erfinder: **Pype, Robert**
**Laar 231**
**B-2070 Ekeren(BE)**
Erfinder: **Brändle, Karl, Dr.**
**Waldstrasse 15**
**D-5060 Bergisch Gladbach 2(DE)**

(54) Verfahren zur Stickstoffoxid-Entfernung aus Rauchgasen.

(57) Verfahren zur Beseitigung von Stickstoffoxid-Anteilen aus Rauchgasen von Verbrennungsanlagen oder Reaktionsgasen, wobei das im Gasstrom enthaltene Stickstoffoxid zu einer stöchiometrischen Zusammensetzung $N_2O_3$ umgesetzt wird.

EP 0 350 643 A2

## Verfahren zur Stickstoffoxid-Entfernung aus Rauchgasen

Die vorliegende Erfindung betrifft ein Verfahren zur Beseitigung von Stickstoffoxid-Anteilen aus Rauchgasen von Verbrennungsanlagen oder Reaktiongasen.

Es ist bekannt, den Stickstoffoxid-Gehalt aus Abgasen mittels speziell dafür geeigenten Katalysatoren unter Zuführung von Ammoniak zu entfernen. Dabei wird das Stickstoffoxid-haltige Abgas in Stickstoff umgewandelt. Das enthaltene NO wird somit in einen inerten Stoff umgewandelt.

Aus der EP 0 174 907 A2 ist ein Verfahren bekannt, bei dem sowohl Stickoxid als auch Schwefeloxid aus Abgasen entfernt werden können. Dabei wird in einer sogenannten Denitrierungszone dem Abgas eine Salpetersäurelösung zugegeben. Dadurch wird das $NO/NO_2$-Verhältnis so eingestellt, daß eine recht einfache Aufkonzentrierung des gebildeten Distickstofftrioxids als Nitrosylschwefelsäure in mehreren nacheinander geschalteten Schwefelsäure-Absorptionsstufen möglich wird. In einem separaten Verfahrensschritt wird unter Zugabe von Luft und bei erhöhter Tempertur eine verdünnte Salpetersäure und eine nitrosefreie Schwefelsäue hergestellt, die wieder in der Denitrierungszone und in den Schwefelsäure-Absorptionsstufen eingesetzt werden. Bei diesem Verfahren werden wegen der Aufkonzentrierung des Distickstofftrioxids als Nitrosylschwefelsäure etwa 7 bis 8 Absorptionstürme benötigt, was technisch einen großen Aufwand bedeutet.

In der DD 212 495 A1 wird ein Verfahren beschrieben zur Entfernung von Stickoxiden aus Abgasen durch nacheinander geschaltete Wäschen mit Wasser und verdünter Salpetersäure, kombiniert mit einer Absorption in konzentrierter Schwefelsäure. Dieses Verfahren entspricht prinzipiell dem Obenbeschriebenen, jedoch in einer modifizierten Fahrweise.

Obwohl nach den beschriebenen Verfahren eine wesentliche Entfernung von Stickstoffoxid aus Abgasen realisiert werden kann, ist eine direkte Verwertung des Stickstoffoxid-Gehaltes des Abgases ohne zwischengeschaltete Aufarbeitungsstufen zur Rückgewinnung von drei-, vier- oder fünfwertigen Stickoxiden nicht möglich.

Aufgabe dieser vorliegenden Erfindung ist es somit, ein Verfahren zur Verfügung zu stellen, welches die Nachteile der obenbeschriebenen Verfahren nicht aufweist.

Überraschenderweise wurde nun gefunden, daß auf einfache Weise eine nahezu quantitative Beseitigung des Stickstoffoxides aus Gasen erreicht wird, wenn das Stickstoffoxid haltige Gas mit einer $HNO_3$-haltigen Schwefelsäurelösung in Kontakt gebracht und damit die chemische Konsistenz des neugebildeten Gases auf solche Weise geändert wird, daß der Stickstoffoxid-Anteil in $N_2O_3$ übergeführt wird.

Gegenstand dieser Erfindung ist somit ein Verfahren zur Beseitigung von Stickstoffoxid-Anteilen aus Rauchgasen von Verbrennungsanlagen oder Reaktionsgasen, wobei zunächst das im Gasstrom enthaltene Stickstoffoxid zu einer stöchiometrischen Zusammensetzung $N_2O_3$ umgesetzt wird.

Bevorzug wird das Verfahren so durchgeführt, daß die Umsetzung des Stickstoffoxides durch Kontakt mit einer 0,1 bis 5, bevorzugt 0,2 bis 1,5, Gew.-% Salpetersäure enthaltenen mittelkonzentrierten Schwefelsäure geschieht.

Diese erfindungsgemäß eingesetzte Schwefelsäurelösung enthält Salpetersäure als Oxidationsmittel. Der Anteil an Salpetersäure in dieser Lösung kann insbesondere zwischen 0,1 bis 5 Gew.-% liegen. Er wird naturgemäß ab hängig vom Stickstoffoxid-Gehalt im Abgas sein. In der Praxis wird jedoch der Anteil zwischen 0,20 und 1,5 Gew.-% liegen.

Durch den geringen Gehalt an Salpetersäure wird auch der Salpetersäure-Dampfdruck in der Schwefelsäurelösung sehr niedrig gehalten, wodurch ein eventueller Nitratgehalt im Gas vernachlässigbar ist.

Die Schwefelsäurekonzentrationen der eingesetzten Lösung können in weiten Bereichen liegen, nämlich zwischen 5 und 96 Gew.-% $H_2SO_4$.

In der Praxis wird jedoch die Konzentration zwischen 30 und 70 Gew.-%, bevorzugt zwischen 55 und 65 Gew.-%, $H_2SO_4$ variieren.

Um eine nahezu vollständige Umwandlung des $NO_x$-Gehaltes zu gewährleisten, sollte die Schwefelsäurekonzentration so eingestellt werden, daß auch Stickoxide mit Stickstoff in der Oxidationsstufe 3 oder 4 nicht absorbiert werden.

Eine bevorzugte Ausführungsform des erfindungsgemäßen Verfahrens besteht darin, daß die mittelkonzentrierte Schwefelsäure eine Temperatur zwischen 20° C und 80° C, bevorzugt zwischen 50° C und 65° C, aufweist.

Durch diese erfindungsgemäße Temperatureinstellung wird eine einfache und vollständige Austreibung des oxidierten Abgases aus diesen Lösungen verwirklicht, damit keine drei- und gegebenenfalls vierwertigen Stickoxide in der mittelkonzentrierten Schwefelsäure verbleiben.

Durch die Oxidation des Stickstoffoxides wird durch Lösen des gebildeten Reaktionswassers die

2

Schwefelsäurekonzentration entscheidend gesenkt. Andererseits kann das zu reinigende Abgas auch noch eine geringe Menge an Wasserdampf enthalten, der Temperatur des Abgases entsprechend. Dadurch wird auch die Schwefelsäurekonzentration gesenkt.

Diesen Umständen gemäß ist es ein wesentlicher Vorteil dieser Temperaturkontrolle, daß eine regulierbare Einstellung der gewünschten Schwefelsäurekonzentration möglich ist. Durch eine erhöhte Temperatur wird also die Wasserbilanzierung in der Lösung und damit auch die Schwefelsäurekonzentration konstant gehalten, so daß die obengenannten Vorteile erhalten bleiben.

Im Falle eines unerwünschten Ansteigens der Konzentration wird erfindungsgemäß durch Zugabe von Wasser und/oder verdünnten Salpetersäurelösung die Schwefelsäurekonzentration geregelt. Beim Unterscheiden der gewünschten Konzentration wird entsprechend höherkonzentrierte Schwefelsäure zudosiert. Es kann auch gegebenenfalls eine verdünnte Salpetersäurelösung zudosiert werden, damit gleichzeitig die Schwefelsäurekonzentration und ebenso eine genauere Steuerung der Salpetersäurekonzentration eingestellt werden.

Insgesamt hat die erfindungsgemäße kombinierte Dosierung von Salpetersäure und Schwefelsäure mehrere Vorteile. Die Mitführung von Schwefelsäure als Kreislaufflüssigkeit verhindert eine Aufkonzentrierung von Salpetersäure während der Oxidation des Stickstoffoxides.

Außerdem kann dieser Ausführungsweise gemäß die Gesamtmenge an Salpetersäure in der Schwefelsäurelösung sehr niedrige gehalten werden, so daß keine Überoxidation von NO zu $NO_2$ auftritt.

In einer bevorzugten Ausführungsform des erfindungsgemäßen Verfahrens kann das $N_2O_3$ mit äquivalenten Mengen an Ammoniak, gegebenenfalls an einem geeigneten Katalysator, zu Stickstoff umgesetzt werden. Es kann ebenso vorteilhaft sein, das $N_2O_3$ mit einer alkalischen Komponente zum entsprechenden Nitrit umzusetzen. Dabei kann die alkaische Komponente gelöst, suspendiert oder im festen Zustand eingesetzt werden.

Nachfolgend wird das erfindungsgemäße Verfahren beispielhaft erläutert, ohne daß hierin eine Beschränkung zu sehen ist.

Beispiel 1

Ein NO-haltiges Abgas der analytischen Zusammenstellung I wird nacheinander in Kontakt gebracht mit einer salpetersäurehaltigen Schwefelsäurelösung (0,34 % $HNO_3$) und einer 15 Gew.-%igen Natriumhydroxydlösung. Beide Lösungen werden in separate Absorptionstürme gefahren. Das neugebildete Abgas weist die analytische Zusammenstellung II auf, entsprechend einem Wirkungsgrad von 96,7 %.

|  | Abgas I | Abgas II |
|---|---|---|
| NO Vol.-% | 0,34 | 0,011 |
| $N_2$ Vol.-% | 92,66 | 93,18 |
| $O_2$ Vol.-% | 3,6 | 3,6 |
| $H_2O$ Vol.-% | 3,40 | 3,20 |

Beispiel 2

3421 Gew.-Teile eines NO-haltigem Abgas der analytischen Zusammenstellung III wird im Gegenstrom in Kontakt gebracht mit einer Schwefelsäurelösung IV bei einer Temperatur von 60° C.

Das oxidierte Abgas wird im Gegenstrom absorbiert in 2338 Gew.-Teilen einer 15 Gew.-% Natriumhydroxidlösung unter Bildung einer Natriumnitritlösung V und eines gereinigten Abgases. Das resultierende Abgas weist nun 190 ppm NO auf.

| Abgas III | Schwefelsäurelösung IV |
|---|---|
| NO : 11 Gew.-Teile<br>$N_2$ : 3208 Gew.-Teile<br>$O_2$ : 154 Gew.-Teile<br>$H_2O$ : 48 Gew.-Teile | $H_2SO_4$ : 60,9 Gew.-%<br>$HNO_3$ : 0,37 Gew.-% |
| Natriumnitritlösung V | |
| $NaNO_2$ : 12,4 g/l<br>$NaNO_3$ : 0,13 Gew.-% | |

**Ansprüche**

1. Verfahren zur Beseitigung von Stickstoffoxid-Anteilen aus Rauchgasen von Verbrennungsanlagen oder Reaktionsgasen, dadurch gekennzeichnet, daß zunächst das im Gasstrom enthaltene Stickstoffoxid zu einer stöchiometrischen Zusammensetzung $N_2O_3$ umgesetzt wird.

2. Verfahren gemäß Anspruch 1, dadurch gekennzeichnet, daß die Umsetzung durch Kontakt mit einer 0,1 bis 5, bevorzugt 0,2 bis 1,5 Gew.-% Salpetersäure enthaltenden mittelkonzentrierten Schwefelsäure geschieht.

3. Verfahren gemäß Anspruch 2, dadurch gekennzeichnet, daß die mittelkonzentrierte Schwefelsäure eine Konzentration zwischen 30 und 70, bevorzugt 55 und 65, Gew.-% aufweist.

4. Verfahren gemäß einem der Ansprüche 2 oder 3, dadurch gekennzeichnet, daß die mittelkonzentrierte Schwefelsäure eine Temperatur zwischen 25° und 80° C bevorzugt zwischen 50° C und 65° C, aufweist.

5. Verfahren gemäß einem oder mehrerer der Ansprüche 1 bis 4, dadurch gekennzeichnet, daß das $N_2O_3$ mit äquivalenten Mengen an Ammoniak, gegebenenfalls an einem Katalysator, zu Stickstoff umsetzt.

6. Verfahren gemäß einem oder mehrerer der Ansprüche 1 bis 4, dadurch gekennzeichnet, daß das $N_2O_3$ mit einer alkalischen Komponente zum entsprechenden Nitrit umesetzt wird.